# NOUVEAU FASCICULE DE BREVET EUROPEEN

(11) **EP 0 348 251 B2**
(45) Date de publication et mention de la décision concernant l'opposition: **13.08.1997**
(45) Mention de la délivrance du brevet: 23.03.1994
(21) Numéro de dépôt: 89401397.8
(22) Date de dépôt: 23.05.1989
(51) Int. Cl.: B01D 53/14

(54) **Liquide absorbant des gaz acides renfermant une composante alcanolamine tertiaire et un activateur d'absorption du CO2 et son application à la désacidification de gaz contenant CO2 et éventuellement d'autres gaz acides**
Flüssiges Absorptionsmittel für saure Gase mit einer tertiären Alkanolaminkomponente und einem CO2-Absorptionsaktivator, seine Anwendung zur Entsäuerung von CO2 enthaltendem Gas und möglicherweise anderen sauren Gasen
Liquid absorbant of acid gases containing a tertiary alcanolamin compound and an absorption activator for CO2 and its use for the deacidification of CO2 and possibly other acid gases

(30) Priorité: 24.05.1988 FR 8806881; 24.05.1988 FR 8806880; 08.12.1988 FR 8816130
(43) Date de publication de la demande: 27.12.1989
(73) Titulaire: ELF AQUITAINE PRODUCTION, 92400 Courbevoie (FR)
(72) Inventeur: Peytavy, Jean-Louis, Bougarber F-64230 Lescar (FR); Le Coz, Philippe, Poey de Lescar F-64230 Lescar (FR); Oliveau, Olivier, F-64230 Lescar (FR)
(74) Mandataire: Boillot, Marc

(56) Documents cités:
- EP-A- 0 033 401
- EP-A- 0 080 817
- EP-A- 0 107 046
- EP-A- 0 107 783
- EP-A- 0 160 203
- EP-A- 0 184 408
- WO-A-86/05474
- DE-A- 2 746 913
- DE-A- 3 408 851
- DE-A- 3 411 532
- DE-A- 3 601 283
- DE-B- 2 551 717
- DE-B- 2 815 447
- GB-A- 2 167 397
- GB-A- 2 191 419
- US-A- 4 096 085
- US-A- 4 217 236
- US-A- 4 238 206
- US-A- 4 336 233
- US-A- 4 624 838
- US-A- 4 696 803
- US-A- 4 775 519

## Description

L'invention concerne un liquide absorbant des gaz acides renfermant une composante alcanolamine tertiaire et un activateur d'absorption du CO₂. Elle se rapporte encore à l'application dudit liquide absorbant à la désacidification de gaz renfermant CO₂ et éventuellement d'autres composés gazeux acides tels que H₂S ou/et COS.

On sait que l'on peut débarrasser les gaz des composés gazeux acides ou gaz acides indésirables, notamment CO₂, H₂S et COS, qu'ils contiennent en soumettant lesdits gaz à un lavage au moyen de liquides absorbants régenérables consistant en solvants organiques ou en solutions aqueuses de solvants organiques, qui retiennent les composes gazeux acides. Industriellement, il existe principalement deux catégories de liquides absorbants utilisées pour réaliser le lavage du gaz renfermant les composés gazeux acides, à savoir, d'une part, les liquides absorbants à action physique tels que sulfolane, N-méthylpyrrolidone, diméthyléther de polyéthylèneglycols, méthanol ou encore carbonate de propylène, qui absorbent les composés gazeux acides tels que précités sans réaction chimique, mais dont l'inconvénient majeur est d'absorber en même temps des quantités importantes d'hydrocarbures et, d'autre part, les liquides absorbants à action chimique prépondérante et notamment les solutions aqueuses d'alcanolamines telles que monoéthanolamine, diéthanolamine, diglycolamine, dîisopropanolamine, triéthanolamine ou encore méthyldiéthanolamine, qui fixent les composés gazeux acides tels que CO₂, H₂S et COS par réaction chimique avec formation de composés susceptibles d'être décomposés par chauffage, ce qui permet de régénérer le liquide absorbant. Les alcanolamines primaires telles que monoéthanolamine ou secondaires telles que diéthanolamine conviennent généralement bien pour l'élimination très poussée du CO₂, mais elles présentent l'inconvénient d'exiger une forte dépense énergétique pour leur régénération.

Avec les alcanolamines tertiaires, notamment méthyldiéthanolamine et triéthanolamine, la consommation d'énergie nécessaire à la régénération est plus faible, mais le gaz traité résultant de l'opération de lavage par lesdites alcanolamines tertiaires possède encore des teneurs en CO₂ allant de quelques milliers de p.p.m. à quelques pour cents selon les cas. Ceci est du au fait que les alcanolamines tertiaires ne réagissent pas directement avec le CO₂, avec comme résultat une cinétique d'absorption du CO₂ par le liquide absorbant renfermant de telles alcanolamines tertiaires, qui est beaucoup plus lente que la cinétique d'absorption du CO₂ par un liquide absorbant à base d'alcanolamines primaires ou secondaires, alors que la vitesse d'absorption de l'H₂S est sensiblement la même quelle que soit l'alcanolamine utilisée dans le liquide absorbant.

Pour tirer parti au maximum de l'économie d'énergie de régénération susceptible d'être réalisée lorsque l'on utilise un liquide absorbant à base d'une alcanolamine tertiaire pour laver des gaz renfermant des impuretés gazeuses acides telles que CO₂, H₂S et COS, tout en obtenant une élimination convenable du CO₂, on a proposé d'ajouter audit liquide absorbant une petite quantité d'un activateur qui accélère l'absorption du CO₂ sans modifier la capacité d'absorption des autres composés gazeux acides et notamment de l'H₂S ni le gain énergétique réalisé lors de la régénération du liquide absorbant.

Parmi les produits proposés jusqu'à présent en tant qu'activateurs d'absorption du CO₂ par les liquides absorbants à base d'alcanolamines tertiaires, on trouve des alcanolamines primaires telles que monoéthanolamine (EP-A - 0 160 203), la monométhylmonoéthanolamine (US - A - 3 622 267) et la pipérazine (US-A - 4 336 233).

Des activateurs associant un composé diaminé particulier à un aminoacide ont été également proposés pour promouvoir l'absorption du CO2 par les liquides absorbants du type solution aqueuse d'un sel ou hydroxyde de métal alcalin (EP-A-0080817). Ledit composé diaminé particulier est un composé sans empêchement stérique du type diamine renfermant à la fois un groupement amine primaire fixé à un carbone tertiaire et un groupement amine tertiaire ou bien du type diaminoalcool renfermant d'une part un groupement amine primaire et un groupement amine tertiaire séparés par quatre chaînons méthylène et d'autre part au moins un groupement hydroxyle.

On sait encore (DE-A-2815447), que l'on peut réaliser une extraction quasi totale du CO₂ contenu dans un mélange gazeux par lavage de ce mélange gazeux à l'aide d'une solution aqueuse d'au moins une polyamine renfermant au moins quatre groupements amino dans la molécule, par exemple N,N-bis(amino-3propyl)éthylènediamine, tripropylènetétramine, tétrapropylènepentamine.

On a maintenant trouvé que certains composés aminés, dont la définition est donnée plus loin, se révélaient être des activateurs performants de l'absorption du CO₂ par les alcanolamines tertiaires.

L'invention propose donc un liquide absorbant des composés gazeux acides qui présente une capacité améliorée d'absorption du CO₂ et qui est constitué d'une solution d'une composante alcanolamine tertiaire, formée d'une ou plusieurs alcanolamines tertiaires, et d'un activateur de l'absorption du CO₂ par ladite composante alcanolamine tertiaire, lequel activateur consiste en un ou plusieurs composés aminés et est présent dans la solution en quantité telle que le rapport du nombre de moles d'activateur au nombre total de moles d'activateur et de composante alcanolamine tertiaire soit de 0,05 à 0,25, ledit liquide absorbant se caractérisant en ce que le ou les composés aminés constituant l'activateur répondent à l'une des formules suivantes

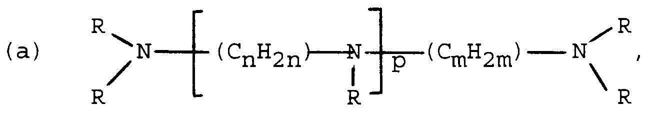

Y - (CₚH₂ₚ) - NH₂, et (c)

R₃ - NH - (CH₂)_{q} - OH , (d)

avec dans ces formules les symboles R désignant chacun, indépendamment, un atome d'hydrogène ou un radical alcoyle ou hydroxyalcoyle en C₁ à C₆, avec l'un au moins des symboles R consistant en un atome d'hydrogène, Y représentant un radical monovalent choisi parmi les radicaux pipérazyles, pipéridinyles, furyles, tétrahydrofuryles, thiényles, tétrahydrothiényles et alcoxy en C₁ à C₆, R₃ représentant un radical alcoyle en C₂ à C₆ à l'exclusion d'un radical alcoyle tertiaire, m et n, identiques ou différents, étant des nombres entiers prenant les valeurs de 2 à 6 et p et q désignant chacun un nombre entier allant de 1 à 6.

Les composés aminés de formule (a) que l'on peut choisir pour constituer l'activateur selon l'invention sont avantageusement ceux pour lesquels les symboles R de la formule les représentant sont des atomes d'hydrogène.

Des composés aminés préférés de ce type sont les polyamines représentées par la formule (e) suivante 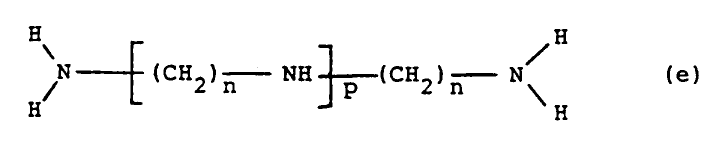 dans laquelle n est un nombre entier allant de 2 à 6 et de préférence égal à 2 ou 3 et p est un nombre entier allant de 1 à 6 et de préférence de 1 à 4.

A titre d'exemples de telles polyamines on peut citer notamment la dipropylènetriamine (en abrégé DPTA) de formule H₂N-(CH₂)₃-NH-(CH₂)₃-NH₂, la diéthylènetriamine (en abrégé DETA) de formule H₂N-(CH₂)₂-NH-(CH₂)₂-NH₂, la triéthylènetétramine en abrégé (TETA) de formule 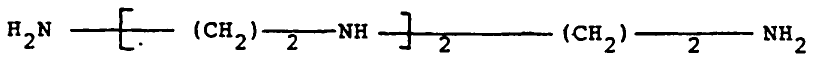 et la tétraéthylènepentamine (en abrégé TEPA) répondant à la formule

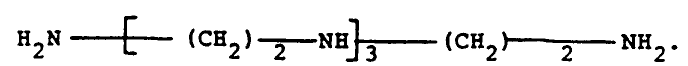

Les composés aminés de formule (c) ou (d), que l'on peut utiliser comme activateurs selon l'invention répondent en particulier aux formules Y₁-(CH₂)_{q} - NH₂ et R₃-NH-(CH₂)_{q}-OH, dans lesquelles Y₁ est un radical monovalent choisi parmi les radicaux 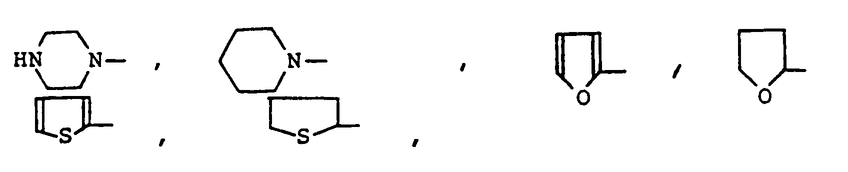 et les radicaux alcoxy en C₁ à C₆, R₃ est un radical alcoyle en C₂ à C₆ et q est un entier prenant les valeurs de 1 à 6.

Des exemples de tels composés aminés sont tels que méthoxypropylamine (en abrégé MOPA), éthoxypropylamine, aminoéthylpipérazine (en abrégé AEPZ), aminopropylpipérazine, aminoéthylpipéridine (en abrégé AEPD), aminopropylpipéridine, furfurylamine (en abrégé FA), éthylmonoéthanolamine (en abrégé EMEA).

Le liquide absorbant selon l'invention se présente généralement sous la forme d'une solution aqueuse de la composante alcanolamine tertiaire et de l'activateur. Le cas échéant, ladite solution aqueuse peut renfermer également une quantité mineure d'un ou plusieurs solvants organiques des gaz acides solubles dans l'eau, notamment sulfolane, méthanol ou N-méthylpyrrolidone.

La concentration du liquide absorbant aqueux en la composante alcanolamine tertiaire peut être comprise entre 1N et 6N et se situe de préférence de 2,5 N à 5 N.

La quantité d'activateur que l'on associe à la composante alcanolamine tertiaire dans le liquide absorbant selon l'invention peut varier assez largement. Ladite quantité est avantageusement telle que le rapport du nombre de moles d'activateur au nombre total de moles d'activateur et de composante alcanolamine tertiaire soit compris entre 0,01 et 0,5 et de préférence aille de 0,05 à 0,25.

Les alcanolamines tertiaires utilisables pour former la composante alcanolamine tertiaire du liquide absorbant peuvent être choisies parmi les diverses alcanolamines tertiaires, qui sont solubles dans l'eau aux concentrations utilisées. Des exemples de ces alcanolamines tertiaires sont tels que N-méthyldiéthanolamine, triéthanolamine, N-éthyldiéthanolamine, diméthylamino-2 éthanol, diméthylamino-2 propanol-1, diméthylamino-3 propanol-1, diméthylamino-1 propanol-2, N-méthyl N-éthyléthanolamine, diéthylamino-2 éthanol, diméthylamino-3 butanol-1, diméthylamino-3 butanol-2, N-méthyl N-isopropyléthanolamine, N-méthyl N-éthyl amino-3 propanol-1, diméthylamino-4 butanol-1, diméthylamino-4 butanol-2, diméthylamino-3 méthyl-2 propanol-1, diméthylamino-1 méthyl-2 propanol-2, diméthylamino-2 butanol-1, diméthylamino-2 méthyl-2 propanol-1. Les alcanolamines tertiaires préférées comprennent la méthyldiéthanolamine, la triéthanolamine, le diméthylamino-2 éthanol, le diméthylamino-3 propanol-1 et le diéthylamino-1 propanol-2.

Le liquide absorbant selon l'invention est utilisable pour effectuer le lavage de gaz divers renfermant CO₂ et éventuellement d'autres composés gazeux acides tels que H₂S et COS en vue de réaliser une désacidification de ces gaz, c'est-à-dire une élimination des composés gazeux acides qu'ils contiennent.

Les gaz à traiter renfermant CO₂ et éventuellement un ou plusieurs autres composés gazeux acides tels que H₂S et COS, peuvent être des gaz de synthèse, des gaz issus de la gazéification du charbon, des gaz de fours à coke, des gaz de raffineries ou encore des gaz naturels et leur teneur globale en composés gazeux acides peut aller de quelques dixièmes de pour cent à quelques dizaines de pour cents en volume.

La mise en oeuvre du lavage du gaz renfermant CO₂ et éventuellement les autres composés gazeux acides à éliminer tels que H₂S et COS comporte généralement une étape d'absorption, au cours de laquelle le gaz à traiter et le liquide absorbant sont mis en contact, de préférence à contre-courant, dans une zone d'absorption pour produire un gaz traité à teneur réduite en composés gazeux acides, ladite teneur correspondant généralement à celle des spécificatons imposées pour le gaz traité, et un liquide absorbant chargé de CO₂ et autres composés gazeux acides éventuels, et une étape de régénération, au cours de laquelle ledit liquide absorbant chargé est soumis à un traitement de régénération pour libérer les composés gazeux acides retenus par le liquide absorbant et produire, d'une part, au moins une fraction gazeuse acide renfermant lesdits composés gazeux acides libérés et, d'autre part, au moins un liquide absorbant régénéré qui est recyclé vers la zone d'absorption.

La régénération du liquide absorbant chargé de CO₂ et des autres composés gazeux acides éventuels, notamment H₂S ou/et COS, est réalisée avantageusement par détente, en une ou plusieurs étapes, d'au moins une partie dudit liquide absorbant chargé, ce qui se traduit par une économie substantielle de l'énergie à utiliser pour cette régénération.

Selon une forme de mise en oeuvre de la régénération, la totalité du liquide absorbant chargé est détendue, en une ou plusieurs étapes, pour libérer la majeure partie du CO₂ présent dans ledit liquide absorbant chargé, puis le liquide absorbant détendu est soumis à une régénération complémentaire par stripage à la vapeur, par chauffage direct ou indirect du liquide absorbant, le liquide absorbant issu de la régénération complémentaire étant recyclé dans la zone d'absorption et notamment dans la partie supérieure de ladite zone. Dans une variante de cette forme de mise en oeuvre, une partie seulement du liquide absorbant détendu est soumise à la régénération complémentaire par stripage, le liquide absorbant issu de ladite régénération complémentaire étant, comme indiqué précédemment, recyclé dans la partie supérieure de la zone d'absorption tandis que la partie du liquide absorbant détendu non soumise à la régénération complémentaire est recyclée dans la zone d'absorption, en un point de cette dernière situé en-dessous du point de recyclage du liquide absorbant régénéré par stripage.

Selon une autre forme de mise en oeuvre de la régénération, une fraction du liquide absorbant chargé est détendue pour libérer la majeure partie du CO₂ qu'elle renferme tandis que la fraction restante du liquide absorbant chargé est soumise directement à une régénération par stripage à la vapeur, par chauffage direct ou indirect de ladite fraction restante, la fraction de liquide absorbant régénérée par stripage étant recyclée dans la partie supérieure de la zone d'absorption tandis que la fraction de liquide absorbant détendue est recyclée dans la zone d'absorption en-dessous du point de recyclage du liquide absorbant régénéré par stripage.

Si besoin est, le liquide absorbant chargé issu de la zone d'absorption peut être soumis à une détente préliminaire pour libérer les gaz non acides tels que les hydrocarbures retenus par le liquide absorbant, avant d'effectuer la régénération proprement dite.

Les étapes d'absorption et de régénération schématisées ci-dessus peuvent être mises en oeuvre dans tout dispositif permettant de réaliser la désacidification d'un gaz au moyen d'un liquide absorbant régénérable et en particulier dans ceux desdits dispositifs permettant d'effectuer une régénération au moins partielle du liquide absorbant chargé par détente et éventuellement de compléter cette régénération par une régénération par stripage. Conviennent en particulier des dispositifs analogues à ceux qui sont schématisés dans les citations US-A-3 622 267 et USA- 4 336 233.

Les conditions opératoires pour la mise en oeuvre des étapes d'absorption et de régénération précitées, notamment température, pression, débit de gaz, débit de liquide absorbant, sont celles préconisées pour les procédés de désacidification de gaz utilisant des liquides absorbants à base d'alcanolamines. Par exemple, l'étape d'absorption au cours de laquelle le gaz à traiter, qui renferme CO₂ et éventuellement un ou plusieurs composés gazeux acides tels que H₂S et COS, est lavé par le liquide absorbant, peut être mise en oeuvre à des températures comprises entre 10°C et 100°C et plus particulièrement comprise entre 30°C et 60°C et sous des pressions comprises entre 1,5 et 100 bars absolus. La régénération par détente est également effectuée à la température à laquelle se trouve le liquide absorbant chargé à détendre, les pressions atteintes après chaque détente étant comprises entre la pression du liquide absorbant chargé soutiré de la zone d'absorption et environ 1,5 bars absolus et décroissant d'une détente à la suivante lorsque plusieurs détentes successives sont effectuées. La régénération par stripage est réalisée de manière conventionnelle en soumettant le liquide absorbant à un rebouillage dans une zone de stripage maintenue en tête à une température comprise entre 80°C et 150°C environ et sous une pression inférieure à 5 bars et le plus souvent comprise entre 1,3 et 2,5 bars absolus.
Lorsque la régénération par détente, en une ou plusieurs étapes, est suivie d'une régénération complémentaire par stripage, la pression du liquide absorbant détendu envoyé à la régénération par stripage est choisie pour être voisine de la pression en tête de la zone de stripage.

L'invention est illustrée par les exemples suivants donnés à titre non limitatif.

### EXEMPLE 1 :

On effectuait trois séries d'essais d'absorption de CO₂ par des liquides absorbants selon l'invention consistant en solutions aqueuses de méthyldiéthanolamine (en abrégé MDEA) et d'un activateur du type polyamine de formule (a) ou, aux fins de comparaison, par des liquides absorbants consistant en solutions aqueuses de MDEA exemptes d'activateur.

Dans chaque essai on avait un gaz renfermant CO₂ au moyen du liquide absorbant choisi en opérant dans une colonne munie en tête d'une sortie pour les gaz, dans sa partie supérieure d'une entrée pour les liquides, dans sa partie inférieure d'une entrée pour les gaz et en fond d'une sortie pour les liquides, l'espace intérieur de la colonne compris entre lesdites entrées pour les liquides et pour les gaz étant pourvu de 12 plateaux perforés régulièrement espaces.

Par l'entrée pour les gaz de la colonne on injectait, avec un débit de 600 Nl/h, un gaz renfermant en volume 40 % de CO₂ et 60 % de méthane et par l'entrée pour les liquides de ladite colonne on introduisait le liquide absorbant choisi avec un débit de 3 l/h. En tête de la colonne on évacuait un gaz appauvri en CO₂ et en fond de ladite colonne on soutirait un liquide absorbant chargé en CO₂.

La pression absolue et la température en tête de la colonne avaient des valeurs égales respectivement à 2,2 bars et 50°C.
Les gaz entrant et sortant de la colonne étaient analysés par chromatographie en phase gazeuse pour déterminer leur teneur en CO₂ et à partir de ces mesures on déduisait la quantité de CO₂ absorbée par le liquide absorbant.

On a défini l'efficacité de l'absorption du CO₂ par le liquide absorbant renfermant un activateur par une grandeur appelée "absorption relative du CO₂", qui représente le rapport du pourcentage molaire de CO₂ absorbé par la solution de MDEA renfermant un activateur au pourcentage molaire de CO₂ absorbé par la solution de MDEA exempte d'activateur.

Les conditions opératoires spécifiques à chacun des essais et les résultats obtenus sont rassemblés dans le tableau I ci-après.

L'examen des résultats figurant dans ledit tableau fait apparaître que les liquides absorbants selon l'invention à base de MDEA et d'un activateur de formule (a) présentent une capacité améliorée d'absorption du CO₂ comparativement aux liquides absorbants renfermant la même alcanolamine tertiaire, mais exempts d'activateur, cette capacité améliorée d'absorption se maintenant et voire même augmentant, lorsque les liquides absorbants selon l'invention renferment une certaine quantité résiduelle de CO₂.

**TABLEAU I**

| Composition du liquide absorbant aqueux | | | | |
|---|---|---|---|---|
| Activateur | | | | Absorption relative du CO₂ |
| MDEA (moles/l) | Nature | Concentration (mole/l) | CO₂ résiduel (g/l) | |
| 4 | - | - | | 1 |
| 3,5 | DPTA | 0,5 | | 2,1 |
| 3,5 | TETA | 0,5 | | 2,2 |
| 3,5 | TEPA | 0,5 | | 2,3 |
| 3,5 | DETA | 0,5 | | 2,3 |
| 4 | - | - | 20 | 1 |
| 3,5 | DPTA | 0,5 | 20 | 2,2 |
| 3,5 | TETA | 0,5 | 20 | 2,2 |
| 3,5 | TEPA | 0,5 | 20 | 2,4 |
| 3,5 | DETA | 0,5 | 20 | 2,4 |
| 4 | - | - | 40 | 1 |
| 3,5 | DPTA | 0,5 | 40 | 2,5 |
| 3,5 | TETA | 0,5 | 40 | 2,4 |
| 3,5 | TEPA | 0,5 | 40 | 2,7 |
| 3,5 | DETA | 0,5 | 40 | 2,7 |

### EXEMPLE 2 :

On effectuait trois séries d'essais d'absorption de CO₂ par des liquides absorbants selon l'invention consistant en solutions aqueuses de méthyldiéthanolamine (en abrégé MDEA) et d'un activateur, à savoir EMEA (formule (d)) ou FA (formule (c)), ou, aux fins de comparaison, par des liquides absorbants consistant en solutions aqueuses de MDEA exemptes d'activateur.

Dans chaque essai on lavait un gaz renfermant CO₂ au moyen du liquide absorbant choisi en opérant dans une colonne analogue à celle utilisée dans l'exemple 1, mais renfermant 9 plateaux perforés régulièrement espacés.

Par l'entrée pour les gaz de la colonne on injectait, avec un débit de 440 Nl/h, un gaz renfermant en volume 40 % de CO₂ et 60 % de méthane et par l'entrée pour les liquides de ladite colonne on introduisait le liquide absorbant choisi avec un débit de 3 l/h. En tête de la colonne on évacuait un gaz appauvri en CO₂ et en fond de ladite colonne on soutirait un liquide absorbant chargé en CO₂.

La pression absolue et la température en tête de la colonne avaient des valeurs égales respectivement à 2,2 bars et 40°C.

Les gaz entrant et sortant de la colonne étaient analysés par chromatographie en phase gazeuse pour déterminer leur teneur en CO₂ et à partir de ces mesures on déduisait la quantité de CO₂ absorbée par le liquide absorbant.

Les conditions opératoires spécifiques à chacun des essais et les résultats obtenus sont rassemblés dans le tableau II.

L'examen des résultats figurant dans le tableau II fait apparaître que les liquides absorbants selon l'invention à base de MDEA et d'un activateur de formule (c) ou (d) présentent une capacité améliorée d'absorption du CO₂ comparativement aux liquides absorbants renfermant la même alcanolamine tertiaire, mais exempts d'activateur, cette capacité améliorée d'absorption se maintenant sensiblement lorsque les liquides absorbants selon l'invention renferment une certaine quantité résiduelle de CO₂.

**TABLEAU II**

| Composition du liquide absorbant aqueux | | | | |
|---|---|---|---|---|
| Activateur | | | | Absorption relative du CO₂ |
| MDEA (moles/l) | Nature | Concentration (mole/l) | CO₂ résiduel (g/l) | |
| 4 | - | - | | 1 |
| 3,5 | EMEA | 0,5 | | 1,95 |
| 3,5 | FA | 0,5 | | 1,85 |
| 4 | - | - | 20 | 1 |
| 3,5 | EMEA | 0,5 | 20 | 1,90 |
| 3,5 | FA | 0,5 | 20 | 1,75 |
| 4 | - | - | 40 | 1 |
| 3,5 | EMEA | 0,5 | 40 | 1,85 |
| 3,5 | FA | 0,5 | 40 | 1,70 |

### EXEMPLE 3 :

On effectuait trois séries d'essais d'absorption de CO₂ par des liquides absorbants selon l'invention consistant en solutions aqueuses de MDEA et d'un activateur de formule (c) ou, aux fins de comparaison, par des liquides absorbants consistant en solutions aqueuses de MDEA exemptes d'activateur.

Dans chaque essai, on avait un gaz renfermant CO₂ au moyen du liquide absorbant choisi en opérant dans une colonne analogue à celle utilisée dans l'exemple 1, mais équipée de 6 plateaux perforés.

Par l'entrée pour les gaz de la colonne on injectait, avec un débit de 600 Nl/h, un gaz renfermant en volume 40 % de CO₂ et 60 % de méthane et par l'entrée pour les liquides de ladite colonne on introduisait le liquide absorbant choisi avec un débit de 3 l/h. En tête de la colonne, on évacuait un gaz appauvri en CO₂ et en fond de ladite colonne on soutirait un liquide absorbant chargé en CO₂.

La pression absolue et la température en tête de la colonne étaient égales respectivement à 2,2 bars et 50°C. Les gaz entrant et sortant de la colonne étaient analysés par chromatographie en phase gazeuse pour déterminer leur teneur en CO₂ et à partir de ces mesures on déduisait la quantité de CO₂ absorbée par le liquide absorbant.

Les conditions opératoires spécifiques à chacun des essais et les résultats obtenus sont présentés dans le tableau III.

**TABLEAU III**

| Composition du liquide absorbant aqueux | | | | |
|---|---|---|---|---|
| Activateur | | | | Absorption relative du CO₂ |
| MDEA (moles/l) | Nature | Concentration (mole/l) | CO₂ résiduel (g/l) | |
| 4 | - | - | | 1 |
| 3,5 | MOPA | 0,5 | | 1,95 |
| 3,5 | AEPD | 0,5 | | 1.9 |
| 4 | - | - | 22 | 1 |
| 3,5 | MOPA | 0,5 | 22 | 1,85 |
| 3,5 | AEPD | 0,5 | 22 | 1,8 |
| 4 | - | - | 42 | 1 |
| 3,5 | MOPA | 0,5 | 42 | 1,8 |
| 3,5 | AEPD | 0,5 | 42 | 1,7 |

L'examen des résultats du tableau III fait encore ressortir la capacité améliorée d'absorption du CO₂ présentée par les liquides absorbants selon l'invention à base de MDEA et d'un activateur de formule (c) par rapport à celle que possèdent les liquides absorbants témoins renfermant la même alcanolamine tertiaire, mais exempts d'activateur. En outre, il apparaît que cette capacité améliorée d'absorption du CO₂ se maintient sensiblement lorsque les liquides absorbants selon l'invention renferment une certaine quantité résiduelle de CO₂.

### EXEMPLE 4 :

On effectuait trois séries d'essais d'absorption de CO₂ par des liquides absorbants selon l'invention consistant en solutions aqueuses de MDEA et d'un activateur consistant en aminoéthylpipérazine (composé de formule (c)) ou, aux fins de comparaison, par des liquides absorbants consistant en solutions aqueuses de MDEA exemptes d'activateur.

Dans chaque essai, on lavait un gaz renfermant CO₂ au moyen du liquide absorbant choisi en opérant dans une colonne analogue à celle utilisée dans l'exemple 1, mais équipée de 12 plateaux perforés.

Par l'entrée pour les gaz de la colonne on injectait, avec un débit de 440 Nl/h, un gaz renfermant en volume 40 % de CO₂ et 60 % de méthane et par l'entrée pour les liquides de ladite colonne on introduisait le liquide absorbant choisi avec un débit de 3 l/h. En tête de la colonne, on évacuait un gaz appauvri en CO₂ et en fond de ladite colonne on soutirait un liquide absorbant chargé en CO₂.

La pression absolue et la température en tête de la colonne étaient égales respectivement à 2,2 bars et 40°C. Les gaz entrant et sortant de la colonne étaient analysés par chromatographie en phase gazeuse pour déterminer leur teneur en CO₂ et à partir de ces mesures on déduisait la quantité de CO₂ absorbée par le liquide absorbant.

Les conditions opératoires spécifiques à chacun des essais et les résultats obtenus sont présentés dans le tableau IV.

**TABLEAU IV**

| Composition du liquide absorbant aqueux | | | | |
|---|---|---|---|---|
| Activateur | | | | Absorption relative du CO₂ |
| MDEA (moles/l) | Nature | Concentration (mole/l) | CO₂ résiduel (g/l) | |
| 4 | - | - | | 1 |
| 3,5 | AEPZ | 0,5 | | 2,2 |
| 4 | - | - | 15 | 1 |
| 3,5 | AEPZ | 0,5 | 15 | 2,1 |
| 4 | - | - | 30 | 1 |
| 3,5 | AEPZ | 0,5 | 30 | 2,1 |

L'examen des résultats du tableau IV fait encore ressortir la capacité améliorée d'absorption du CO₂ présentée par les liquides absorbants selon l'invention à base de MDEA et d'un activateur de formule (c) par rapport à celle que possèdent les liquides absorbants témoins renfermant la même alcanolamine tertiaire, mais exempts d'activateur. En outre, il apparaît que cette capacité améliorée d'absorption du CO₂ se maintient sensiblement lorsque les liquides absorbants selon l'invention renferment une certaine quantité résiduelle de CO₂.

## Revendications

1. Liquide absorbant des composés gazeux acides, qui présente une capacité améliorée d'absorption du CO₂, et qui est constitué d'une solution d'une composante alcanolamine tertiaire, formée d'une ou plusieurs alcanolamines tertiaires, et d'un activateur de l'absorption du CO₂ par ladite composante alcanolamine tertiaire, lequel activateur consiste en un ou plusieurs composés aminés et est présent dans la solution en quantité telle que le rapport du nombre de moles d'activateur au nombre total de moles d'activateur et de composante alcanolamine tertiaire soit de 0,05 à 0,25, ledit liquide absorbant se caractérisant en ce que le ou les composés aminés constituant l'activateur répondent à l'une des formules suivantes 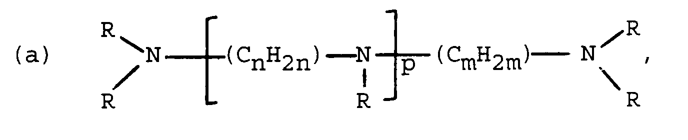
Y - (CₚH₂ₚ) - NH₂, et (c)
R₃ - NH - (CH₂)_{q} - OH , (d)
avec dans ces formules les symboles R désignant chacun, indépendamment, un atome d'hydrogène ou un radical alcoyle ou hydroxyalcoyle en C₁ à C₆, avec l'un au moins des symboles R consistant en un atome d'hydrogène, Y représentant un radical monovalent choisi parmi les radicaux pipérazyles, pipéridinyles, furyles, tétrahydrofuryles, thiényles, tétrahydrothiényles et alcoxy en C₁ à C₆, R₃ représentant un radical alcoyle en C₂ à C₆ à l'exclusion d'un radical alcoyle tertiaire, m et n, identiques ou différents, étant des nombres entiers prenant les valeurs de 2 à 6 et p et q désignant chacun un nombre entier allant de 1 à 6.

2. Liquide absorbant selon la revendication 1, caractérisé en ce que l'activateur qu'il renferme comprend au moins un composé aminé de formule (a) pour laquelle tous les symboles R sont des atomes d'hydrogène.

3. Liquide absorbant selon la revendication 1 ou 2, caractérisé en ce que l'activateur qu'il renferme comprend au moins un composé aminé de formule (a) pour laquelle m et n, identiques ou différents, prennent les valeurs 2 ou 3.

4. Liquide absorbant selon la revendication 1, caractérisé en ce que l'activateur qu'il renferme comprend au moins une polyamine de formule 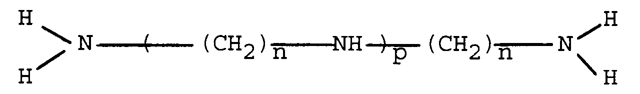 dans laquelle n est un nombre entier allant de 2 à 6 et de préférence égal à 2 ou 3 et p est un nombre entier allant de 1 à 6 et de préférence de 1 à 4.

5. Liquide absorbant selon la revendication 4, caractérisé en ce que l'activateur qu'il renferme comprend au moins une polyamine choisie dans le groupe formé par la dipropylènetriamine, la diéthylènetriamine, la triéthylènetétramine et la tétraéthylènepentamine.

6. Liquide absorbant selon la revendication 1, caractérisé en ce que l'activateur qu'il renferme comprend au moins un composé aminé de formule Y₁ - (CH₂)_{q} - NH₂, dans laquelle Y₁ est un radical monovalent choisi parmi les radicaux, 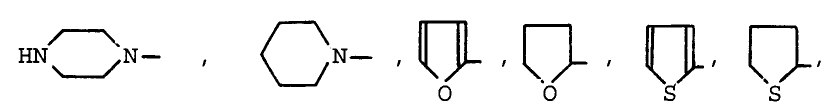 et les radicaux alcoxy en C₁ à C₆ et q est un nombre entier prenant les valeurs allant de 1 à 6.

7. Liquide absorbant selon la revendication 6, caractérisé en ce que l'activateur qu'il renferme comprend au moins un composé choisi parmi les composés méthoxypropylamine, éthoxypropylamine, aminoéthylpipérazine, aminopropylpipérazine, aminoéthylpipéridine, aminopropylpipéridine, furfurylamine.

8. Liquide absorbant selon la revendication 1, caractérisé en ce que l'activateur qu'il renferme comprend de l'éthylmonoethanolamine.

9. Liquide absorbant selon l'une des revendications 1 à 8, caractérisé en ce qu'il se présente sous la forme d'une solution aqueuse de la composante alcanolamine tertiaire et de l'activateur.

10. Liquide absorbant selon la revendication 9, caractérisé en ce que ladite solution renferme également une quantité mineure d'au moins un solvant organique des gaz acides soluble dans l'eau, notamment sulfolane, méthanol ou N-méthylpyrrolidone.

11. Liquide absorbant selon la revendication 9 ou 10, caractérisé en ce que la concentration de la composante alcanolamine tertiaire dans la solution aqueuse est comprise entre 1N et 6N, ladite concentration allant de préférence de 2,5N à 5N.

12. Liquide absorbant selon l'une des revendications 1 à 11, caractérisé en ce que la composante alcanolamine tertiaire comprend au moins l'une des alcanolamines tertiaires choisies parmi N-méthyldiéthanolamine, triéthanolamine, diméthylamino-2 éthanol, diméthylamino-3 propanol-1 et diéthylamino-1 propanol-2.

13. Liquide absorbant selon l'une des revendications 1 à 12, caractérisé en ce que la composante alcanolamine tertiaire consiste en méthyldiéthanolamine.

14. Application du liquide absorbant selon l'une des revendications 1 à 13 à la désacidification de gaz renfermant CO₂ et éventuellement un ou plusieurs autres composés gazeux acides et notamment H₂S et/ou COS.

15. Application selon la revendication 14, caractérisée en ce que le gaz à désacidifier est soumis à un traitement comportant une étape d'absorption, au cours de laquelle ledit gaz et le liquide absorbant sont mis en contact dans une zone d'absorption pour produire un gaz traité à teneur réduite en composés gazeux acides et un liquide absorbant chargé de CO₂ et autres composés gazeux acides éventuels, et une étape de régénération au cours de laquelle ledit liquide absorbant chargé est soumis à un traitement de régénération pour libérer les composés acides qu'il a retenu et produire, d'une part, au moins une fraction gazeuse acide renfermant lesdits composés gazeux acides libérés et, d'autre part, au moins un liquide absorbant régénéré qui est recyclé vers la zone d'absorption.

16. Application selon la revendication 15, caractérisée en ce que la régénération du liquide absorbant chargé est réalisée par détente, en une ou plusieurs étapes, d'au moins une partie dudit liquide absorbant chargé.

17. Application selon la revendication 15, caractérisée en ce que la régénération du liquide absorbant chargé est réalisée en soumettant la totalité dudit liquide absorbant chargé à une détente, en une ou plusieurs étapes, pour libérer la majeure partie du CO₂ présent dans ledit liquide absorbant chargé, puis en soumettant le liquide absorbant détendu à une régénération complémentaire par stripage à la vapeur, par chauffage direct ou indirect du liquide absorbant, le liquide absorbant issu de la régénération complémentaire étant recyclé dans la zone d'absorption.

18. Application selon la revendication 17, caractérisée en ce qu'une partie seulement du liquide absorbant détendu est soumis à la régénération complémentaire par stripage, le liquide absorbant issu de la régénération complémentaire étant recyclé dans la partie supérieure de la zone d'absorption tandis que la partie du liquide absorbant détendu non soumise à la régénération complémentaire est recyclée dans la zone d'absorption en-dessous du liquide absorbant régénéré par stripage.

19. Application selon la revendication 15, caractérisée en ce que la régénération du liquide absorbant chargé est réalisée en soumettant une fraction du liquide absorbant chargé à une détente, en une ou plusieurs étapes, pour libérer la majeure partie du CO₂ qu'elle renferme tandis que la fraction restante du liquide absorbant chargé est soumise directement à une régénération par stripage à la vapeur, par chauffage direct ou indirect du liquide absorbant de ladite fraction restante, la fraction de liquide absorbant régénérée par stripage étant recyclée dans la partie supérieure de la zone d'absorption tandis que la fraction de liquide absorbant détendue est recyclée dans la zone d'absorption en dessous du liquide absorbant régénéré par stripage.

## Claims

1. Absorbent liquid which absorbs acid gas compounds, which has an improved CO₂ absorption capacity, and which consists of a solution of a tertiary alkanolamine component, formed by one or a plurality of tertiary alkanolamines, and an activator which activates CO₂ absorption by the tertiary alkanolamine component, which activator consists of one or a plurality of amine compounds, and which is present in the solution in an amount such that the ratio of the number of moles of activator to the total number of moles of activator plus tertiary alkanolamine component is from 0.05 to 0.25, the absorbent liquid being characterised in that the amine compound or compounds constituting the activator complies/comply with one of the following formulae: 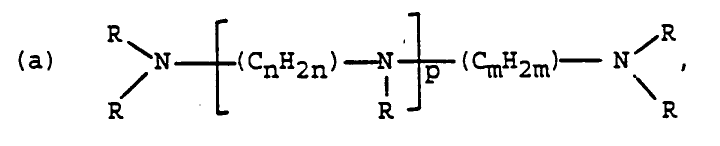
Y - (CₚH₂ₚ) - NH₂, and (c)
R₃ - NH - (CH₂)_{q} - OH , (d)
in which the symbols R each designate, independently, a hydrogen atom or a C₁ to C₆ alkyl or hydroxyalkyl radical, with at least one of the symbols R consisting of a hydrogen atom, Y represents a monovalent radical selected from among piperazyl, piperidinyl, furyl, tetrahydrofuryl, thienyl, tetrahydrothienyl and C₁ to C₆ alkoxy radicals, R₃ represents a C₂ to C₆ alkyl radical, with the exception of a tertiary alkyl radical, m and n, which may be identical or different, are integers assuming values of from 2 to 6, and p and q each designate an integer of from 1 to 6.

2. Absorbent liquid according to Claim 1, characterised in that the activator which it contains comprises at least one amine compound of formula (a) for which all the symbols R are hydrogen atoms.

3. Absorbent liquid according to Claim 1 or 2, characterised in that the activator which it contains comprises at least one amine compound of formula (a) for which m and n, which may be identical or different, assume the value of 2 or 3.

4. Absorbent liquid according to Claim 1, characterised in that the activator which it contains comprises at least one polyamine of the formula 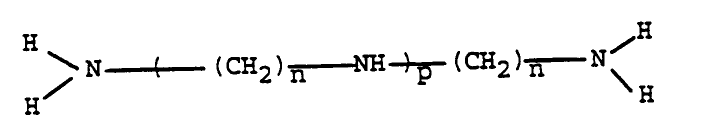 in which n is an integer of from 2 to 6 and preferably of 2 or 3 and p is an integer of from 1 to 6 and preferably of from 1 to 4.

5. Absorbent liquid according to Claim 4, characterised in that the activator which it contains comprises at least one polyamine selected from the group consisting of dipropylenetriamine, diethylenetriamine, triethylenetetramine and tetraethylenepentamine.

6. Absorbent liquid according to Claim 1, characterised in that the activator which it contains comprises at least one amine compound of the formula Y₁ - (CH₂)_{q} - NH₂, in which Y₁ is a monovalent radical selected from among the radicals: 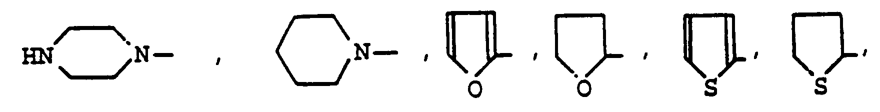 and the C₁ to C₆ alkoxy radicals, and q is an integer assuming a value of from 1 to 6.

7. Absorbent liquid according to Claim 6, characterised in that the activator which it contains comprises at least one compound selected from among the compounds methoxypropylamine, ethoxypropylamine, aminoethylpiperazine, aminopropylpiperazine, aminoethylpiperidine, aminopropylpiperidine and furfurylamine.

8. Absorbent liquid according to Claim 1, characterised in that the activator which it contains comprises ethylmonoethanolamine.

9. Absorbent liquid according to any one of Claims 1 to 8, characterised in that it is in the form of an aqueous solution of the tertiary alkanolamine component and the activator.

10. Absorbent liquid according to Claim 9, characterised in that the solution also contains a small amount of at least one organic solvent of the acid gases, which is soluble in water, in particular sulpholane, methanol or N-methylpyrrolidone.

11. Absorbent liquid according to Claim 9 or Claim 10, characterised in that the concentration of the tertiary alkanolamine component in the aqueous solution is between 1N and 6N, the concentration preferably ranging from 2.5N to 5N.

12. Absorbent liquid according to any one of Claims 1 to 11, characterised in that the tertiary alkanolamine component comprises at least one of the tertiary alkanolamines selected from among N-methyldiethanolamine, triethanolamine, 2-dimethylamino ethanol, 3-dimethylamino 1-propanol and 1-diethylamino 2-propanol.

13. Absorbent liquid according to any one of Claims 1 to 12, characterised in that the tertiary alkanolamine component is methyldiethanolamine.

14. Application of the absorbent liquid according to any one of Claims 1 to 13 to the deacidification of gazes containing CO₂ and optionally one or more other acid gas compounds, in particular H₂S and/or COS.

15. Application according to Claim 14, characterised in that the gas to be deacidified is subjected to a treatment comprising an absorption step during which the gas and absorbent liquid are brought into contact in an absorption zone to produce a treated gas with a reduced content of acid gas compounds and an absorbent liquid charged with CO₂ and any other acid gas compounds, and a regeneration step during which the charged absorbent liquid is subjected to a regeneration treatment to release the acid compounds which it contained and to produce, firstly, at least one acid gas fraction containing the released acid gas compounds and, secondly, at least one regenerated absorbent liquid which is recycled to the absorption zone.

16. Application according to Claim 15, characterised in that the charged absorbent liquid is regenerated by expansion of at least some of the charged absorbent liquid in one or more steps.

17. Application according to Claim 15, characterised in that the charged absorbent liquid is regenerated as a result of all the charged absorbent liquid being subjected to an expansion process, in one or more steps, to release the majority of the CO₂ present in the charged absorbent liquid, then as a result of the expanded absorbent liquid being subjected to an additional regeneration process by steam stripping, by direct or indirect heating of the absorbent liquid, the absorbent liquid emerging from the additional regeneration process being recycled into the absorption zone.

18. Application according to Claim 17, characterised in that only some of the expanded absorbent liquid is subjected to the additional process of regeneration by stripping, the absorbent liquid emerging from the additional regeneration process being recycled into the upper part of the absorption zone whilst the part of the expanded absorbent liquid which is not subjected to the additional regeneration process is recycled into the absorption zone below the absorbent liquid regenerated by stripping.

19. Application according to Claim 15, characterised in that the charged absorbent liquid is regenerated as a result of a fraction of the charged absorbent liquid being subjected to an expansion process, in one or more steps, to release the majority of the CO₂ which it contains, whilst the remaining fraction of the charged absorbent liquid is subjected directly to a regeneration process by steam stripping, by direct or indirect heating of the absorbent liquid of the remaining fraction, the fraction of absorbent liquid regenerated by stripping being recycled into the upper part of the absorption zone whilst the expanded absorbent liquid fraction is recycled into the absorption zone below the absorbent liquid regenerated by stripping.

## Patentansprüche

1. Saure gasförmige Verbindungen absorbierende Flüssigkeit, die ein erhöhtes Absorptionsvermögen für CO₂ aufweist und aus einer Lösung einer aus einem oder mehreren tertiären Alkanolaminen gebildeten tertiären Alkanolaminkomponente und einem Aktivator für die Absorption des CO₂ durch die tertiäre Alkanolaminkomponente besteht, wobei der Aktivator seinerseits aus einer oder mehreren Aminverbindungen besteht und in der Lösung in einer solchen Menge vorliegt, daß das Verhältnis der Zahl der Mole Aktivator zur Gesamtzahl der Mole Aktivator und tertiäre Alkanolaminkomponente 0,05 bis 0,25 beträgt, und die absorbierende Flüssigkeit dadurch **gekennzeichnet** ist, daß die den Aktivator bildende Aminverbindung bzw. bildenden Aminverbindungen einer der folgenden Formel entspricht bzw. entsprechen: 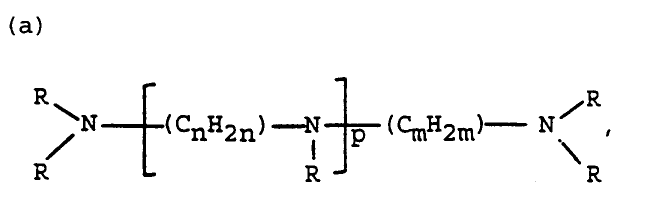
Y - (CₚH₂ₚ) - NH₂ und (c)
R₃ - NH - (CH₂)_{q} - OH, (d)
wobei in diesen Formeln die Symbole R jeweils unabhängig voneinander ein Wasserstoffatom oder einen C₁-C₆-Alkyl- oder -Hydroxyalkylrest darstellen, wobei mindestens ein R für ein Wasserstoffatom steht, Y einen einwertigen Rest, ausgewählt unter Piperazyl-, Piperidinyl-, Furyl-, Tetrahydrofuryl-, Thienyl-, Tetrahydrothienylresten und C₁-C₆-Alkoxy, und R₃ einen C₂-C₆-Alkylrest unter Ausschluß eines tertiären Alkylrestes bedeuten, m und n gleich oder verschieden sind und ganze Zahlen von 2 bis 6 und p und q jeweils eine ganze Zahl von 1 bis 6 bedeuten.

2. Absorbierende Flüssigkeit nach Anspruch 1, dadurch **gekennzeichnet**, daß der darin enthaltene Aktivator wenigstens eine Aminverbindung der Formel (a) umfaßt, bei der sämtliche Symbole R H-Atome bedeuten.

3. Absorbierende Flüssigkeit nach einem der Ansprüche 1 oder 2, dadurch **gekennzeichnet**, daß der darin enthaltene Aktivator wenigstens eine Aminverbindung der Formel (a) umfaßt, bei der m und n gleich oder verschieden sind und den Wert 2 oder 3 haben.

4. Absorbierende Flüssigkeit nach Anspruch 1, dadurch **gekennzeichnet**, daß der darin enthaltene Aktivator wenigstens ein Polyamin der Formel 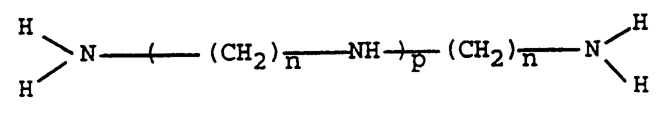 umfaßt, worin n eine ganze Zahl von 2 bis 6, vorzugsweise 2 oder 3, und p eine ganze Zahl von 1 bis 6, vorzugsweise von 1 bis 4, bedeuten.

5. Abzorbierende Flüssigkeit nach Anspruch 4, dadurch **gekennzeichnet**, daß der darin enthaltene Aktivator wenigstens ein Polyamin umfaßt, auzgwählt aus der Gruppe Dipropylentriamin, Diethylentriamin, Triethylentetramin und Tetraethylenpentamin.

6. Absorbierende Flüssigkeit nach Anspruch 1, dadurch **gekennzeichnet**, daß der darin enthaltene Aktivator wenigstens eine Aminverbindung der Formel Y₁ - (CH₂)_{q} - NH₂ umfaßt, bei der Y₁ einen einwertigen Rest, ausgewählt aus den Resten 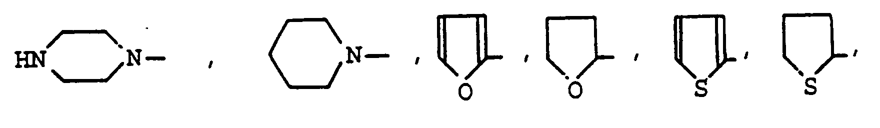 und C₁-C₆-Alkoxy-Resten und q eine ganze Zahl von 1 bis 6 bedeuten.

7. Absorbierende Flüssigkeit nach Anspruch 6, dadurch **gekennzeichnet**, daß der darin enthaltene Aktivator wenigstens eine Verbindung umfaßt, ausgewählt aus den Verbindungen Methoxypropylamin, Ethoxypropylamin, Aminoethylpiperazin, Aminopropylpiperazin, Aminoethylpiperidin, Aminopropylpiperidin und Furfurylamin.

8. Absorbierende Flüssigkeit nach Anspruch 1, dadurch **gekennzeichnet**, daß der darin enthaltene Aktivator Ethylmonoethanolamin umfaßt.

9. Absorbierende Flüssigkeit nach einem der Ansprüche 1 bis 8, dadurch **gekennzeichnet**, daß sie in Form einer wässerigen Lösung der tertiären Alkanolaminkomponente und des Aktivators vorliegt.

10. Absorbierende Flüssigkeit nach Anspruch 9, dadurch **gekennzeichnet**, daß die Lösung außerdem noch eine geringere Menge wenigstens eines wasserlöslichen organischen Lösungsmittels für saure Gase, insbesondere Sulfolan, Methanol oder N-Methylpyrrolidon enthält.

11. Absorbierende Flüssigkeit nach Anspruch 9 oder 10, dadurch **gekennzeichnet**, daß die Konzentration der tertiären Alkanolaminkomponente in der wässerigen Lösung zwischen 1 N und 6 N, insbesondere **von** 2,5 N **bis** 5 N, liegt.

12. Absorbierende Flüssigkeit nach einem der Ansprüche 1 bis 11, dadurch **gekennzeichnet**, daß die tertiäre Alkanolaminkomponente wenigstens eines der tertiären Alkanolamine, ausgewählt unter N-Methyldiethanolamin, Triethanolamin, 2-Dimethylaminoethanol, 3-Dimethylamino-1-propanol und 1-Diethylamino-2-propanol, umfaßt.

13. Absorbierende Flüssigkeit nach einem der Ansprüche 1 bis 12, dadurch **gekennzeichnet**, daß die tertiäre Alkanolaminkomponente Methyldiethanolamin ist.

14. Verwendung der absorbierenden Flüssigkeit nach einem der Ansprüche 1 bis 13 zur Entsäuerung von CO₂ und gegebenenfalls eine oder mehrere andere saure gasförmige Verbindungen und insbesondere H₂S und/oder COS enthaltenden Gasen.

15. Verwendung nach Anspruch 14, dadurch **gekennzeichnet**, daß das zu entsäuernde Gas einer Behandlung unterworfen wird, die eine Absorptionsstufe, auf der das Gas und die absorbierende Flüssigkeit in einer Absorptionszone miteinander in Berührung gebracht werden, um ein behandeltes Gas mit einem verminderten Gehalt an sauren gasförmigen Verbindungen und eine mit CO₂ und gegebenenfalls anderen sauren gasförmigen Verbindungen beladene absorbierende Flüssigkeit zu erzeugen, und eine Regenerierungsstufe umfaßt, auf der die beladene absorbierende Flüssigkeit einer Regenerierungsbehandlung unterworfen wird, um die darin zurückgehaltenen sauren Verbindungen freizusetzen und einerseits wenigstens eine die freigesetzten sauren gasförmigen Verbindungen enthaltende saure gasförmige Fraktion und andererseits wenigstens eine regenerierte absorbierende Flüssigkeit zu erzeugen, die wieder der Absorptionszone zugeführt wird.

16. Verwendung nach Anspruch 15, dadurch **gekennzeichnet**, daß die Regenerierung der beladenen absorbierenden Flüssigkeit durch Entspannung wenigstens eines Teils der beladenen absorbierenden Flüssigkeit ein- oder mehrstufig durchgeführt wird.

17. Verwendung nach Anspruch 15, dadurch **gekennzeichnet**, daß die Regenerierung der beladenen absorbierenden Flüssigkeit dadurch durchgeführt wird, daß man die gesamte beladene absorbierende Flüssigkeit ein- oder mehrstufig entspannt, um den Hauptanteil des CO₂ in der beladenen absorbierenden Flüssigkeit freizusetzen, und danach die entspannte absorbierende Flüssigkeit durch Wasserdampfdestillation, durch direkte oder indirekte Erwärmung der absorbierenden Flüssigkeit, zusätzlich regeneriert, wobei die absorbierende Flüssigkeit nach ihrer zusätzlichen Regenerierung wieder der Absorptionszone zugeführt wird.

18. Verwendung nach Anspruch 17, dadurch **gekennzeichnet**, daß lediglich ein Teil der entspannten absorbierenden Flüssigkeit durch Strippen zusätzlich regeneriert wird, wobei die absorbierende Flüssigkeit nach ihrer zusätzlichen Regenerierung wieder dem oberen Teil der Absorptionszone zugeführt wird, während der Teil der entspannten absorbierenden Flüssigkeit, der nicht zusätzlich regeneriert wurde, unterhalb der durch Strippen regenerierten absorbierenden Flüssigkeit wieder der Absorptionszone zugeführt wird.

19. Verwendung nach Anspruch 15, dadurch **gekennzeichnet**, daß die Regenerierung der beladenen absorbierenden Flüssigkeit dadurch durchgeführt wird, daß man eine Fraktion der beladenen absorbierenden Flüssigkeit ein- oder mehrstufig entspannt, um den Hauptanteil des darin enthaltenen CO₂ freizusetzen, während die restliche Fraktion der beladenen absorbierenden Flüssigkeit durch Wasserdampfdestillation, durch direkte oder indirekte Erwärmung der absorbierenden Flüssigkeit der restlichen Fraktion, unmittelbar regeneriert wird, wobei die durch Strippen regenerierte Fraktion der absorbierenden Flüssigkeit wieder dem oberen Teil der Absorptionszone zugeführt wird, während die Fraktion der entspannten absorbierenden Flüssigkeit unterhalb der durch Strippen regenerierten absorbierenden Flüssigkeit wieder der Absorptionszone zugeführt wird.
